# EUROPÄISCHE PATENTSCHRIFT

(11) **EP 0 691 224 B1**
(45) Veröffentlichungstag und Bekanntmachung des Hinweises auf die Patenterteilung: **11.11.1998**
(21) Anmeldenummer: 95890126.6
(22) Anmeldetag: 03.07.1995
(51) Int. Cl.: B60C 13/00

(54) **Fahrzeugreifen**
Vehicle tyre
Bandage pneumatique pour véhicule

(30) Priorität: 06.07.1994 AT 1335/94
(43) Veröffentlichungstag der Anmeldung: 10.01.1996
(73) Patentinhaber: Semperit Reifen Aktiengesellschaft, A-2514 Traiskirchen (AT)
(72) Erfinder: Loreth, Wolfgang, Dr. Dipl.-Ing., D-30827 Garbsen (DE)
(74) Vertreter: Vinazzer, Edith, Dipl.-Ing.

(56) Entgegenhaltungen:
- GB-A- 2 018 718

## Beschreibung

Die gegenständliche Erfindung betrifft einen Fahrzeugreifen mit zumindest einem an mindestens einer der Seitenwände aufgebrachten, eine Flockschicht aufweisenden Zeichen, wie beispielsweise einem Schriftzeichen, einem dekorativen Element oder dergleichen. Die Erfindung betrifft ferner ein Verfahren zum Aufbringen eines solchen Zeichens auf einer Seitenwand eines Fahrzeugreifens.

Es ist in den letzten Jahren üblich geworden, sowohl die vorschriftsmäßig anzubringenden Bezeichnungen als auch dekorative Elemente an den Seitenwänden von Fahrzeugreifen in möglichst gut sichtbarer Weise aufzubringen. Bekannte dekorative Elemente sind beispielsweise an der Seitenwand zur Gänze oder auch bereichsweise ring- oder streifenweise verlaufende Elemente, die insbesondere in Weiß oder auch in einer anderen Farbe gehalten sind. Nach dem Stand der Technik handelt es sich dabei üblicherweise um in der gewünschten Farbe eingefärbte Gummimischungen, die am unvulkanisierten Reifen aufgebracht werden und mit dem Reifen vulkanisiert werden. Neben dem relativ aufwendigen Herstellverfahren besteht ein weiteres Problem dieser bekannten Methode darin, daß die färbige Gummimischung gegenüber der schwarzen Seitenwandmischung so gestaltet werden muß, daß aus der Seitenwand keine verfärbenden Mischungsbestandteile in das Dekor einwandern können. Mit speziellen Barrieremischungen, die zwischen der Seitenwand und der gefärbten Mischung am Reifen aufgebracht sind kann eine Problemlösung erzielt werden, was jedoch die Herstellung verkompliziert. Eine möglichst langlebige und dauerhafte Abschirmung der wanderungsfreudigen Mischungsbestandteile aus den Seitenwänden konnte auf diese Weise aber in noch nicht zur Gänze befriedigender Weise erzielt werden.

Ein Fahrzeugreifen der eingangs genannten Art ist beispielsweise aus der GB 2 018 718 A bekannt. Auch hier geht es darum, unschöne Verfärbungen von an den Reifenseitenwänden vorgesehenen Zeichen zu verhindern. Zu diesem Zweck werden entsprechend gestaltete Labels, insbesondere aus PVC, einseitig mit einer Flockschicht versehen und mit ihrer zweiten Seite an der Reifenseitenwand, insbesondere in dort bereits beim Vulkanisieren ausgebildeten Vertiefungen, angeklebt. Die Verwendung von Flock für diese Zwecke ist zwar günstig, da hier das erwähnte Problem der Verfärbung kaum eine Rolle spielt, es ist jedoch eine Tatsache, daß sich nachträglich auf einem Reifen aufgeklebte Schichten, Trägermaterialien etc. nach relativ kurzer Zeit von der Reifenseitenwand wieder lösen.

Die Erfindung hat sich nun die Aufgabe gestellt, eine mit diesen Problemen nicht behaftete Möglichkeit des Aufbringens und der Ausgestaltung eines eine Flockschicht aufweisenden Zeichens auf der Seitenwand eines Reifens aufzufinden, wobei das Zeichen sehr gut haltbar und mit möglichst wenig Aufwand aufbringbar sein soll.

Gelöst wird die gestellte Aufgabe erfindungsgemäß dadurch, daß die Flockschicht auf die Reifenseitenwand direkt durch elektrostatische Beflockung aufgebracht ist

Dadurch, daß die Reifenseitenwand direkt elektrostatisch beflockt wird, gibt es keine Probleme mit der dauerhaften Anbindung der Flockschicht am Reifen. Die Vorteile, die mit der Ausführung eines Zeichens in der Seitenwand eines Reifens als Flockschicht einhergehen sind ferner insbesondere die sehr gute Erkennbarkeit (durch die samtartige Oberfläche), bei Verwendung von entsprechendem Flockmaterial ausgezeichnete Haltbarkeit und Abriebsfestigkeit sowie die Möglichkeit, beliebige Farben zu wählen. Bei der Technik des Herstellens von Flockschichten (Technik des Beflockens) handelt es sich um eine Technik, die seit vielen Jahren erprobt ist und auf verschiedensten Gebieten, beispielsweise in der Textilindustrie, in der Spielzeugindustrie und auch im Fahrzeugbau angewandt wird.

Gemäß einer bevorzugten Ausführungsform der Erfindung besteht die Flockschicht aus Polyamid- oder Polyesterflock. Diese Flockmaterialien zeichnen sich durch eine sehr hohe Widerstands- und Verschleißfestigksit aus.

Dabei ist es ferner von Vorteil, wenn ein Präzisionsschnittflock in einer Schnittlänge von 0,5 bis 5 mm, insbesondere von 0,5 bis 1,5 mm verwendet wird. Ein derartiger Flock ist auf Reifenseitenwänden insbesondere aus optischen Gründen und aus Gründen der Erkennbarkeit des Zeichens von Vorteil.

Gemäß einer bevorzugten Ausführungsform der Erfindung sind in der Reifenseitenwand entsprechend des oder der zu bildenden Zeichen(s) gestaltete Vertiefungen vorgesehen, deren Tiefe vorzugsweise der Höhe der Flockschicht entspricht. Auch diese Maßnahme ist einerseits aus optischen Gründen von Vorteil und begünstigt andererseits die Haltbarkeit der Flockschicht.

Die Erfindung betrifft ferner ein Verfahren zum Aufbringen eines eine Flockschicht aufweisenden Zeichens, beispielsweise eines Schriftzeichens, eines dekorativen Elementes od. dgl., auf eine Seitenwand eines Fahrzeugreifens. Um eine dauerhafte Anbindung der Flockschicht an der Reifenseitenwand zu erzielen, wird direkt auf die Reifenseitenwand leitfähiger Klebstoff aufgebracht wird, an welchem der Flock durch elektrostatische Beflockung fixiert wird.

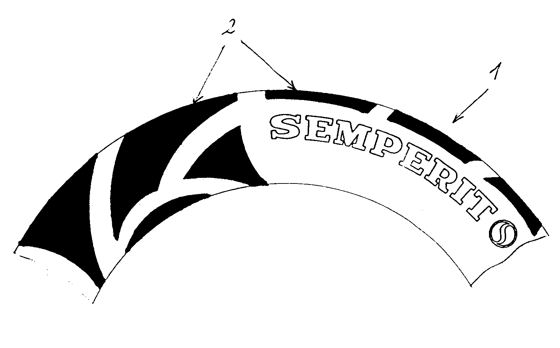

Weitere Merkmale, Vorteile und Einzelheiten der Erfindung werden nun in der nachfolgenden Beschreibung und anhand der einzigen Zeichnungsfigur, die schematisch eine Draufsicht auf einen Teilbereich der Seitenwand eines Fahrzeugreifens darstellt, näher erläutert.

Bei der Beflockung werden grundsätzlich auf einer mit einem Klebstoff beschichteten Oberfläche Kurzfasern senkrecht zur Oberfläche elektrostatisch angeheftet. Zum Beflocken von Reifenseitenwänden wird bevorzugt nach folgenden Verfahrensschritten vorgegangen: mechanisches Aufrauhen (falls erforderlich), ggf. Primern, Auftragen eines Klebestoffes, Beflocken, Vulkanisieren (bei ca. 150° C, etwa 15 min.) und ggf. Beseitigen des Flocküberschusses.

Für die gegenständliche Anwendung der elektrostatischen Beflockung der Seitenwand eines Fahrzeugreifens kommen die bekannten und geeigneten Klebstoffe, beispielsweise auf der Basis von Polyurethan, Ethylenpropylen oder verschiedenen Copolymeren in Frage. Diese Klebstoffe besitzen die entsprechende elektrische Leitfähigkeit, eine gute Vernetzbarkeit und eine niedrige Oberflächenspannung, die das Eindringen des Flocks erleichtert. Beim Vorgang der Beflockung selbst wird zwischen einer Hochspannungselektrode, die gleichzeitig das Dosiersieb für den Flock sein kann, und den über dem leitfähigen Klebstoff geerdeten Reifen ein elektrisches Feld aufgebaut. Der durch das Dosiersieb in das Feld eingebrachte Flock wird durch Ionisation oder Influenz aufgeladen. Durch Ladungsverschiebungen bekommt der stäbchenförmige Flock Dipolcharakter und richtet sich entlang der Feldlinien aus. Aufgrund des vorhandenen Feldpotentials werden die Flockpartikel beschleunigt in das Klebstoffbett eingeschossen. Die für die Ladungsverschiebung erforderliche Leitfähigkeit des Flocks, die vom Flockgrundmaterial her nicht vorhanden ist, wird durch eine auf den Flock aufgebrachte Präparation erzielt.

Für die erfindungsgemäße Anwendung der Aufbringung einer Flockschicht auf der Seitenwand eines Fahrzeugreifens kommt Polyamidflock oder auch Polyesterflock in Frage, da diese Flockmaterialien eine sehr hohe Widerstands- und Verschleißfestigkeit aufweisen. Der Flock wird als Präzisionsschnittflock mit einer Schnittlänge von 0,5 bis etwa 5 mm, insbesondere mit einer Schnittlänge von 0,5 bis 1,5 mm, verwendet. Dabei können die handelsüblichen Präzisionsschnittflocke verwendet werden.

In der einzigen Zeichnungsfigur ist beispielhaft und schematisch ein Ausschnitt auf eine Draufsicht einer Seitenwand 1 eines Fahrzeugreifens dargestellt. Die Flockschichten 2 sind dekorative Elemente. Wie schon erwähnt, können beliebige Zeichen oder Beschriftungen als Flockschicht oder Flockschichten auf der Seitenwand oder den Seitenwänden von Fahrzeugreifen angebracht sein.

Da Flock in einer Vielzahl von Standardfarben erhältlich ist und auch Sondereinfärbungen bei den Materialien Polyamid und Polyester ohne weiteres möglich sind, bietet sich diesbezüglich eine Vielzahl von Möglichkeiten, die Seitenwände von Fahrzeugreifen dekorativ und auffallend zu gestalten. Die Kontrastwirkung von schwarzem Flock gegenüber den üblicherweise schwarzen Seitenwänden ist übrigens optisch besonders ansprechend.

Es bietet sich nun einerseits die Möglichkeit, eine in üblicher Weise gestaltete Seitenwand eines Fahrzeugreifens durch Auftragen einer Flockschicht entsprechend zu gestalten. Andererseits besteht auch die Möglichkeit, in den Reifenseitenwänden entsprechend des oder der zu bildenden Zeichen(s) gestaltete Vertiefungen vorzusehen, wo nach Auftragen des Klebstoffes und unter Anwendung des geschilderten Verfahrens die Flockschicht angebracht wird. Die Vertiefungen können während der Vulkanisation durch Erhebungen an dem die Reifenseitenwand formenden Formteil entstehen. Ihre Tiefe wird dabei auf die Flockschichthöhe insbesondere so abgestimmt, daß die Flockschicht jeweils in einer Ebene mit der sie umgebenden Seitenwand liegt, oder die Flockschicht diesen Seitenwandbereich geringfügig überragt.

## Patentansprüche

1. Fahrzeugreifen mit zumindest einem an mindestens einer der Seitenwände aufgebrachten, eine Flockschicht aufweisenden Zeichen, wie beispielsweise einem Schriftzeichen, einem dekorativen Element oder dergleichen, dadurch gekennzeichnet, daß die Flockschicht auf die Reifenseitenwand direkt durch elektrostatische Beflockung aufgebracht ist.

2. Fahrzeugreifen nach Anspruch 1, dadurch gekennzeichnet, daß die Flockschicht (2) aus Polyamid- oder Polyesterflock besteht.

3. Fahrzeugreifen nach Anspruch 1 oder 2, dadurch gekennzeichnet, daß die Flockschicht (2) aus Präzisionsschnittflock mit einer Schnittlänge von 0,5 bis 5 mm, insbesondere von 0,5 bis 1,5 mm besteht.

4. Fahrzeugreifen nach einem der Ansprüche 1 bis 3, dadurch gekennzeichnet, daß in der Reifenseitenwand (1) entsprechend des oder der zu bildenden Zeichen(s) gestaltete Vertiefungen vorgesehen sind, deren Tiefe vorzugsweise der Höhe der Flockschicht (2) entspricht.

5. Verfahren zum Aufbringen eines eine Flockschicht aufweisenden Zeichens, beispielsweise eines Schriftzeichens, eines dekorativen Elementes od. dgl., auf eine Seitenwand eines Fahrzeugreifens, dadurch gekennzeichnet, daß direkt auf die Reifenseitenwand leitfähiger Klebstoff aufgebracht wird, an welchem der Flock durch elektrostatische Beflockung fixiert wird.

## Claims

1. Vehicle tyre, having at least one symbol, which is applied to at least one of the sidewalls and has a flock layer, said symbol being, for example, a written symbol, a decorative element or the like, characterised in that the flock layer is applied directly to the sidewall of the tyre by electrostatic flocking.

2. Vehicle tyre according to claim 1, characterised in that the flock layer (2) comprises polyamide or polyester flock.

3. Vehicle tyre according to claim 1 or 2, characterised in that the flock layer (2) comprises accurately cut flock having a cut length of between 0.5 and 5 mm, more especially between 0.5 and 1.5 mm.

4. Vehicle tyre according to one of claims 1 to 3, characterised in that recesses are provided in the sidewall (1) of the tyre and are configured according to the symbol(s) to be formed, the depth of said recesses preferably corresponding to the height of the flock layer (2).

5. Method of applying a symbol which has a flock layer, for example a written symbol, a decorative element or the like, to a sidewall of d vehicle tyre, characterised in that conductive adhesive is applied directly to the sidewall of the tyre, the flock being fixed on said adhesive by electrostatic flocking.

## Revendications

1. Pneumatique pour véhicule comportant au moins une marque déposée sur l'une des parois latérales et comportant une couche de flocs, comme par exemple des signes d'écriture, un élément décoratif ou analogue, caractérisé en ce que la couche de flocs est déposée directement sur la paroi latérale du pneumatique au moyen d'un flocage électrostatique.

2. Pneumatique pour véhicule selon la revendication 1, caractérisé en ce que la couche de flocs (2) est formée de flocs de polyamide ou de polyester.

3. Pneumatique pour véhicule selon la revendication 1 ou 2, caractérisé en ce que la couche de flocs (2) est formée par des flocs découpés de précision possédant une longueur de 0,5 à 5 mm et notamment de 0,5 à 1,5 mm.

4. Pneumatique pour véhicule selon l'une des revendications 1 à 3, caractérisé en ce que dans la paroi latérale (1) du pneumatique sont prévus des renfoncements qui sont agencés en fonction du ou des signes à former et dont la profondeur correspond de préférence à la hauteur de la couche de flocs (2).

5. Procédé pour apposer un signe comportant une couche de flocs, par exemple un signe d'écriture, un élément décoratif ou analogue sur une paroi latérale d'un pneumatique pour véhicule, caractérisé en ce qu'on applique directement sur la paroi latérale du pneumatique un adhésif conducteur, sur lequel on fixe les flocs par flocage électrostatique.
